# EUROPEAN PATENT SPECIFICATION

(11) **EP 2 084 027 B1**
(45) Date of publication and mention of the grant of the patent: **04.01.2012**
(21) Application number: 07833716.9
(22) Date of filing: 30.10.2007
(51) Int. Cl.: B60H 3/00

(54) **IONIZER AND AIR CONDITIONING SYSTEM FOR AUTOMOTIVE VEHICLES USING THE SAME**
IONISATOR UND DAVON GEBRAUCH MACHENDES KLIMAANLAGEN-SYSTEM FÜR KRAFTFAHRZEUGE
IONISEUR ET SYSTÈME DE CLIMATISATION POUR VÉHICULE AUTOMOBILE

(30) Priority: 31.10.2006 KR 20060106600; 29.10.2007 KR 20070109048
(43) Date of publication of application: 05.08.2009
(73) Proprietor: Halla Climate Control Corp., Daejeon 306-230 (KR)
(72) Inventor: JEE, Yong Jun, Daejeon 306-230 (KR); KIM, Jae Ho, Daejeon 306-230 (KR); PARK, Ha Young, Daejeon 306-230 (KR); KANG, Sung Ho, Daejeon 306-230 (KR); BYON, Sang Chul, Daejeon 306-230 (KR); SEO, Yong Eun, Daejeon 306-230 (KR)
(74) Representative: Koepe, Gerd L.
(86) International application number: PCT/KR2007/005408
(87) International publication number: WO 2008/054125

(56) References cited:
- DE-B- 1 261 295
- JP-A- 2004 181 999
- JP-A- 2004 182 123
- KR-A- 20050 082 314
- KR-A- 20060 102 226

## Description

### [Field of the Invention]

The present invention relates to an ionizer and an air conditioning system for automotive vehicles using the same and, more particularly, to an ionizer capable of reducing generation of positive ions detrimental to the human body to the greatest possible degree and an air conditioning system for automotive vehicles using the same.

### [Background Art]

An automotive vehicle is provided with an air conditioning system for controlling the temperature of a vehicle room air. The air conditioning system is designed to generate a warm air in the winter to keep a vehicle room at an elevated temperature, while generating a cold air in the summer to keep the vehicle room cool.

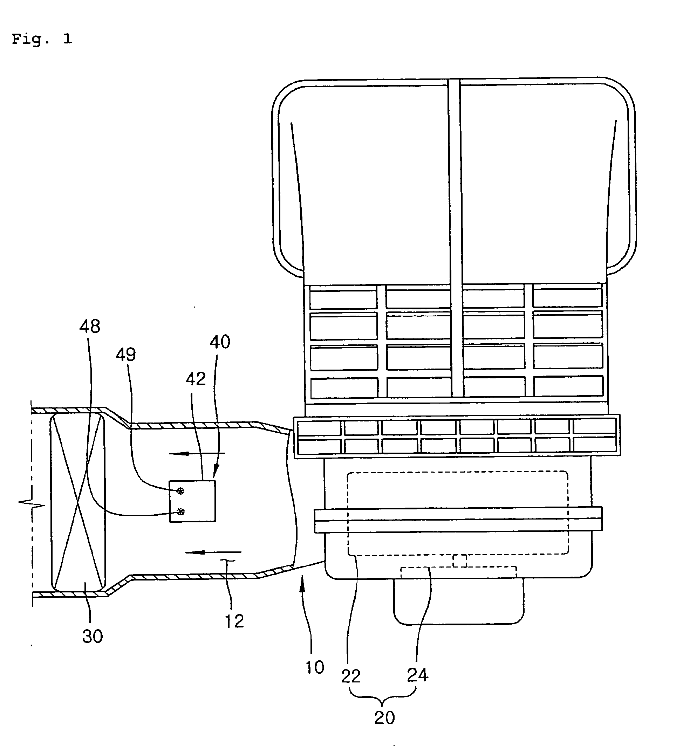

As shown in Fig. 1, a conventional air conditioning system includes an air conditioning case 10 in which a blower 20 is installed. The blower 20 includes a blower fan 22 and a blower motor 24 for driving the blower fan 22. The blower 20 serves to inhale an external air or an internal air and then feed the inhaled air to an internal passageway 12 of the air conditioning case 10.

The air conditioning system further includes an evaporator 30 arranged inside the internal passageway 12 of the air conditioning case 10. The evaporator 30 includes a plurality of tubes (not shown) through which coolant can flow. The evaporator 30 serves to cool the air passing through the internal passageway 12 and keep the vehicle room temperature pleasant by introducing the cooled air into a vehicle room.

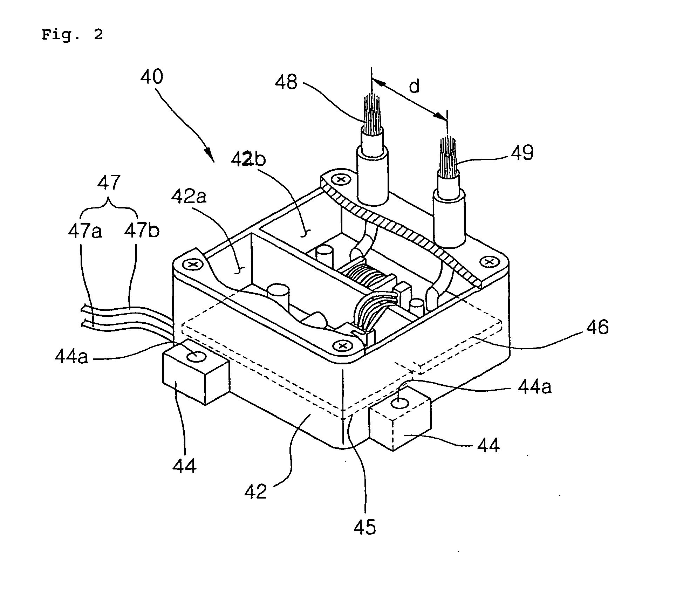

The air conditioning system further includes an ionizer 40 for emitting positive ions or negative ions toward the air drawn into the evaporator 30. The ionizer 40 is a device that generates a large quantity of positive ions or negative ions. As illustrated in Figs. 1 and 2, the ionizer 40 includes a main body 42 which is a box-like rectangular body. On the outer circumference of the main body 42, there are formed a plurality of coupling portions 44 each having a coupling hole 44a (only two coupling portions 44 are shown in the figures). A coupling screw (not shown) is inserted into the coupling hole 44a of each of the coupling portions 44 and then is threadedly engaged with the air conditioning case 10, thereby fixing the main body 42 to the air conditioning case 10.

A first compartment 42a and a second compartment 42b are formed within the main body 42, the first compartment 42a receiving a constant voltage generating unit 45 and the second compartment 42b receiving a high voltage generating unit 46. The constant voltage generating unit 45 refers to a main printed circuit board carrying transistors, diodes, condensers, resistors and the like. The constant voltage generating unit 45 functions to keep constant the voltage applied through a power input part 47 and also to protect an internal circuit from electrical or physical shocks imparted on the inside and outside of the main body 42. In this regard, the power input part 47 is formed of a negative line 47a and a positive line 47b and is adapted to apply an electric power of the vehicle to the constant voltage generating unit 45.

The high voltage generating unit 46 is an auxiliary printed circuit board carrying a transformer, high voltage diodes, condensers and the like. The high voltage generating unit 46 is electrically connected to the constant voltage generating unit 45 and is designed to generate high voltage pulses by amplifying and increasing the constant voltage fed from the constant voltage generating unit 45.

The ionizer 40 includes a negative ion discharge electrode 48 and a positive ion discharge electrode 49, both of which are attached to the main body 42. The negative ion discharge electrode 48 and the positive ion discharge electrode 49 are arranged side by side in a mutually spaced-apart relationship and extend toward the inside of the internal passageway 12 through the air conditioning case 10, as can be seen in Fig. 1. In particular, the negative ion discharge electrode 48 and the positive ion discharge electrode 49 extend side by side and one above the other toward the inside of the internal passageway 12 and serve to generate negative ions and positive ions in the same quantity by directly discharging high voltage pulses into the air existing in the internal passageway 12.

In this connection, the negative ion discharge electrode 48 and the positive ion discharge electrode 49 are formed into a brush shape so that they can have a broad discharging surface area. The distance d between the negative ion discharge electrode 48 and the positive ion discharge electrode 49 is approximately 20 to 50mm.

With the ionizer 40 configured as above, negative ions and positive ions are generated by discharging high voltage pulses into the air. The particles of negative ions and positive ions thus generated are allowed to flow through the internal passageway 12 and then are introduced into the evaporator 30. The particles of negative ions and positive ions introduced into the evaporator 30 sterilize bacteria and mold living on the surface of the evaporator 30, thereby enhancing the degree of cleanliness of the air introduced into the vehicle room and creating a comfortable room environment.

However, the air conditioning system referred to above poses a problem in that a large quantity of positive ions generated in the ionizer 40 are admitted into the vehicle room, consequently creating a harmful environment within the vehicle room.

According to the results of research conducted in recent years, it was reported that the positive ions generated in the ionizer 40 are effective in sterilizing various kinds of bacteria and mold but detrimental to the human body because they tend to acidify the physical constitution of the human body, cause abnormality in the autonomic nervous system and weaken the immunity against diseases. Therefore, it is the usual trend to minimize exposure of the human body to the positive ions.

Since a large quantity of positive ions are generated in the ionizer 40, however, the conventional air conditioning system has a drawback in that, even after sterilizing the surface of the evaporator 30, a substantial amount of positive ions are not extinguished but introduced into the vehicle room. This drawback leads to a problem of making the vehicle room environment harmful.

It would be possible to reduce the generation quantity of positive ions by controlling the magnitude or application time of the voltage applied to the negative ion discharge electrode 48 and the positive ion discharge electrode 49. In this case, there is a problem in that the quantity of negative ions generated is also reduced together with the reduction in the positive ion generation quantity, which leads to sharp reduction in the sterilization effect. Another problem is that the configuration of the air conditioning system and the control method thereof become complicated due to the need to control the magnitude or application time of the voltage.

### [Detailed Description of the Invention]

### [Technical Problems]

In view of the above-noted problems, it is an object of the present invention to provide an ionizer capable of reducing the generation quantity of positive ions within the limits of not lowering the sterilizing ability of an evaporator whereby the quantity of harmful positive ions introduced into a vehicle room can be reduced to the greatest possible degree, and also to provide an air conditioning system for automotive vehicles using the ionizer.

Another object of the present invention is to provide an ionizer capable of reducing the generation quantity of positive ions with no reduction in the generation quantity of negative ions whereby the introduction of harmful positive ions into a vehicle room can be avoided without lowering the sterilizing efficiency of an evaporator, and also to provide an air conditioning system for automotive vehicles using the ionizer.

### [Solution to the Technical Problems]

With the above objects in view, the present invention provides an ionizer comprising: a high voltage generating unit for generating high voltage pulses; and a negative ion discharge electrode and a positive ion discharge electrode for generating negative ions and positive ions, respectively, by discharging the high voltage pulses generated in the high voltage generating unit into an air, wherein the positive ion discharge electrode has an ion generation portion formed in a smaller number than the number of an ion generation portion of the negative ion discharge electrode so that the quantity of positive ions generated in the positive ion discharge electrode can be smaller than the quantity of negative ions generated in the negative ion discharge electrode.

Furthermore, the present invention provides an air conditioning system for automotive vehicles comprising: an air conditioning case, an evaporator for cooling an air blown through an internal passageway of the air conditioning case, and an ionizer including a negative ion discharge electrode and a positive ion discharge electrode for emitting negative ions and positive ions toward the evaporator, the negative ion discharge electrode and the positive ion discharge electrode arranged on an upstream side of the evaporator in a spaced-apart relationship with each other, wherein the positive ion discharge electrode has an ion generation portion formed in a smaller number than the number of an ion generation portion of the negative ion discharge electrode so that the quantity of positive ions generated in the positive ion discharge electrode can be smaller than the quantity of negative ions generated in the negative ion discharge electrode.

### [Advantageous Effects]

In accordance with the ionizer of the present invention and the air conditioning system for automotive vehicles using the same, the generation quantity of positive ions is reduced within the limits of not lowering the sterilizing ability of an evaporator. This provides an effect that the introduction of harmful positive ions into a vehicle room can be minimized without lowering the sterilizing efficiency of an evaporator.

Furthermore, owing to the fact that the quantities of negative ions and positive ions are automatically controlled depending on the operation or non-operation of an air conditioning system, the number of positive ions introduced into the vehicle room can be remarkably reduced while enhancing the sterilizing efficiency of an evaporator to the greatest possible degree. Therefore, there is provided an effect that the vehicle room environment can be kept comfortable.

### [Brief Description of the Drawings]

Fig. 1 is a section view showing a prior art air conditioning system incorporating an ionizer.
Fig. 2 is a perspective view showing the prior art air conditioning system.
Fig. 3 is a section view showing an ionizer in accordance with the present invention and an air conditioning system for automotive vehicles using the same.
Fig. 4 is a section view taken along line IV-IV in Fig. 3.
Fig. 5 is a perspective view illustrating the ionizer in accordance with the present invention.
Fig. 6 is a graph plotting an ozone quantity against a distance in a negative ion discharge electrode and a positive ion discharge electrode constituting the ionizer of the present invention.
Fig. 7 is a view illustrating a modified example of the controller constituting the ionizer of the present invention.
Figs. 8 to 10 are perspective views showing modified examples of the negative ion discharge electrode and the positive ion discharge electrode.
Fig. 11 is a flowchart illustrating an ionizer control method in accordance with the present invention.
Fig. 12 is a flowchart illustrating a modified example of the ionizer control method in accordance with the present invention.

### [Best Mode for Carrying out the Invention]

A preferred embodiment of an ionizer in accordance with the present invention and an air conditioning system for automotive vehicles using the same will now be described with reference to the accompanying drawings. Like reference numerals will be used to designate the same elements as those of the prior art.

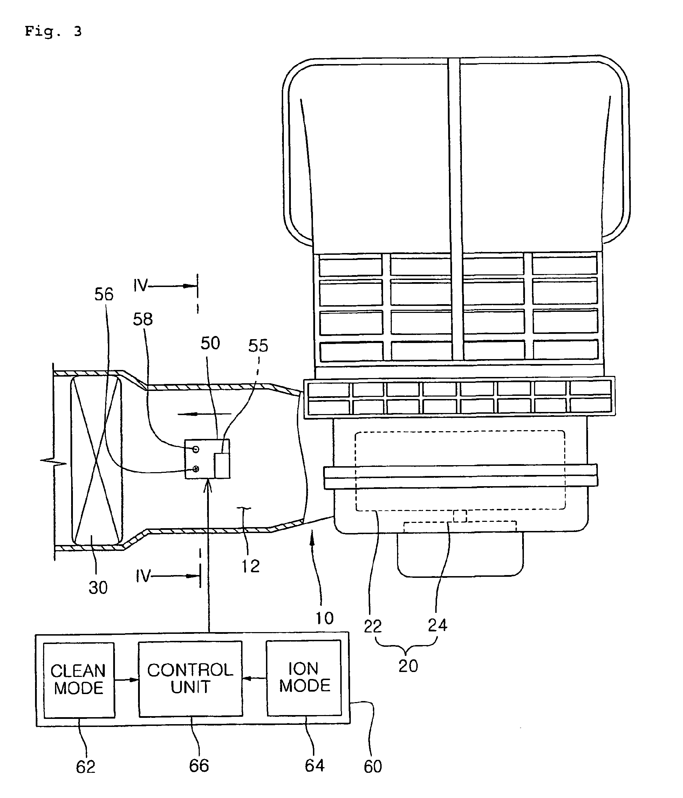

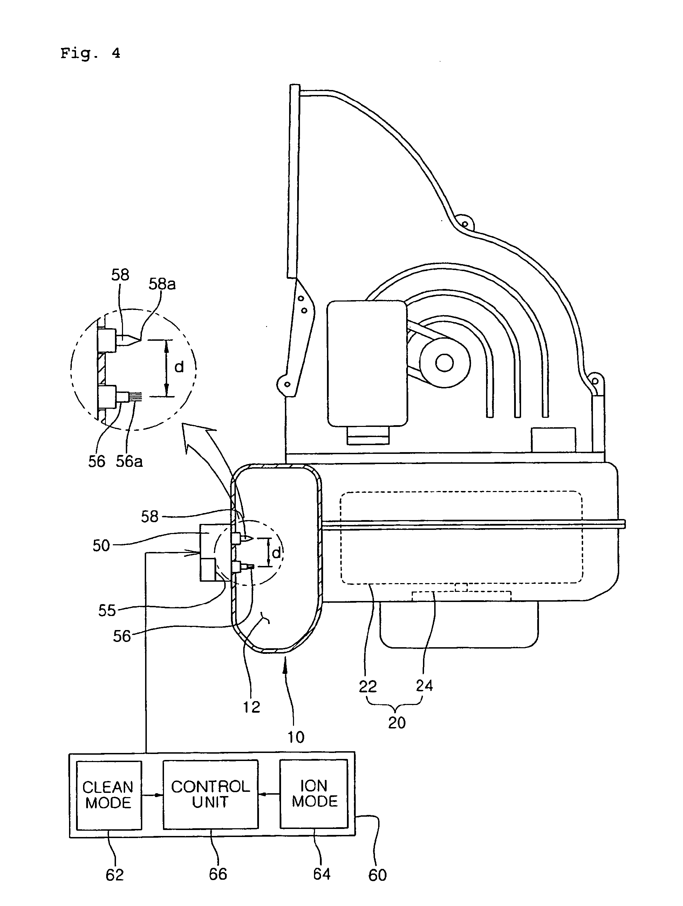

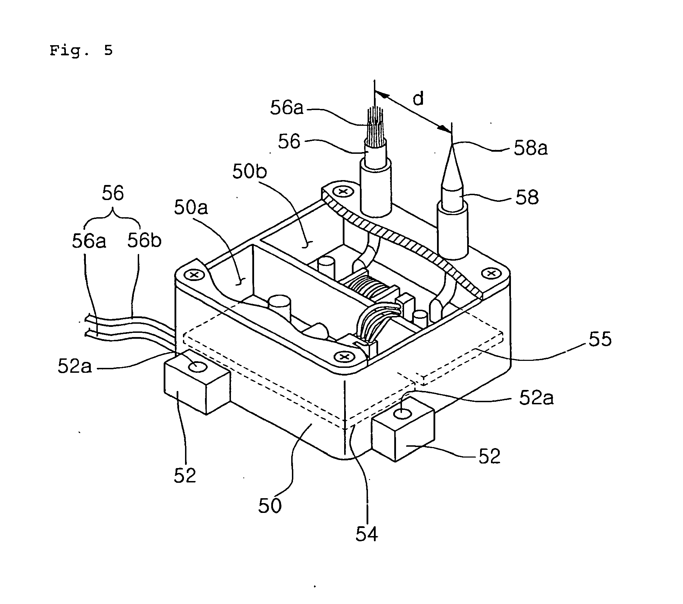

Fig. 3 is a section view showing an ionizer in accordance with the present invention and an air conditioning system for automotive vehicles using the same. Fig. 4 is a section view taken along line IV-IV in Fig. 3. Fig. 5 is a perspective view illustrating the ionizer in accordance with the present invention.

Referring first to Figs. 3 to 5, an ionizer of the present invention includes a main body 50 which is a box-like rectangular body. On the outer circumference of the main body 50, there are formed a plurality of coupling portions 52 each having a coupling hole 52a. A coupling screw (not shown) is inserted into the coupling hole 52a of each of the coupling portions 52 and then is threadedly engaged with an air conditioning case 10, thereby fixing the main body 50 to the air conditioning case 10.

A first compartment 50a and a second compartment 50b are formed within the main body 50, the first compartment 50a receiving a constant voltage generating unit 54 and the second compartment 50b receiving a high voltage generating unit 55. The constant voltage generating unit 54 refers to a main printed circuit board carrying transistors, diodes, condensers, resistors and the like. The constant voltage generating unit 54 functions to keep constant the voltage applied through a power input part 56 and also to protect an internal circuit from electrical or physical shocks imparted on the inside and outside of the main body 50. In this regard, the power input part 56 is formed of a negative line 56a and a positive line 56b and is adapted to apply an electric power of an automotive vehicle to the constant voltage generating unit 54.

The high voltage generating unit 55 is an auxiliary printed circuit board carrying a transformer, high voltage diodes, condensers and the like. The high voltage generating unit 55 is electrically connected to the constant voltage generating unit 54 and is designed to generate high voltage pulses by amplifying and increasing the constant voltage fed from the constant voltage generating unit 54.

The ionizer of the present invention includes a negative ion discharge electrode 56 and a positive ion discharge electrode 58, both of which are attached to an outer surface of the main body 50 in a spaced-apart relationship with each other. The negative ion discharge electrode 56 and the positive ion discharge electrode 58 are extended toward the inside of an internal passageway 12 through the air conditioning case 10. In particular, the negative ion discharge electrode 56 and the positive ion discharge electrode 58 are arranged side by side across an air flow direction.

The negative ion discharge electrode 56 has an ion generating portion 56a at its tip end. The ion generating portion 56a serves to generate negative ions by directly discharging the high voltage pulses fed from the high voltage generating unit 55 into the air existing in the internal passageway 12.

The positive ion discharge electrode 58 has an ion generating portion 58a at its tip end. The ion generating portion 58a serves to generate positive ions by directly discharging the high voltage pulses fed from the high voltage generating unit 55 into the air existing in the internal passageway 12.

Owing to the fact that the negative ion discharge electrode 56 and the positive ion discharge electrode 58 generate negative ions and positive ions by directly discharging the high voltage pulses fed from the high voltage generating unit 55 into the air existing in the internal passageway 12, the particles of negative ions and positive ions is moved through the internal passageway 12 and introduced into an evaporator 30. Thus, various kinds of bacteria and mold living on the surface of the evaporator 30 are sterilized by the particles of negative ions and positive ions introduced into the evaporator 30.

The ion generation portions 56a and 58a of the negative ion discharge electrode 56 and the positive ion discharge electrode 58 have pointed ends, the number of which differs in the negative ion discharge electrode 56 and the positive ion discharge electrode 58. As can be seen in Figs. 4 and 5, the ion generation portion 56a of the negative ion discharge electrode 56 is in the form of a brush having a plurality of pointed ends, while the ion generation portion 58a of the positive ion discharge electrode 58 is in the form of a needle having a single pointed end.

The brush-shaped ion generation portion 56a of the negative ion discharge electrode 56 is made of a carbon material and is adapted to emit high voltage pulses from the individual bristles thereof. This makes it possible for the ion generation portion 56a to emit a large quantity of high voltage pulses and consequently to generate a large quantity of negative ions.

The needle-shaped ion generation portion 58a of the positive ion discharge electrode 58 is made of a metallic material and is adapted to emit high voltage pulses from the single pointed end. This allows the ion generation portion 58a to emit a small quantity of high voltage pulses and consequently to generate a small quantity of positive ions. The quantity of positive ions generated in the positive ion discharge electrode 58 is quite smaller than the quantity of negative ions generated in the negative ion discharge electrode 56.

In this regard, it is preferred that the needle type positive ion discharge electrode 58 is formed to have a diameter of about 4mm at its base end portion. This is because the positive ions are stably generated when the base end diameter is about 4mm.

The positive ion discharge electrode 58 and the negative ion discharge electrode 56 differ from each other in the number of pointed ends of the ion generation portions, meaning that the negative ions are generated at a different ratio compared to the positive ions. Specifically, the ratio of the positive ions is quite smaller than that of the negative ions.

Therefore, it is possible to greatly reduce the quantity of positive ions introduced into the vehicle room without having to reduce the quantity of negative ions. This makes it possible to remarkably reduce environmental pollution in the vehicle room caused by the introduction of the positive ions.

As shown in Figs. 4 and 5, the negative ion discharge electrode 56 and the positive ion discharge electrode 58 extend toward the internal passageway 12 and are arranged preferably in such a way that the gap d left therebetween is in a range of about 5 mm to 20mm.

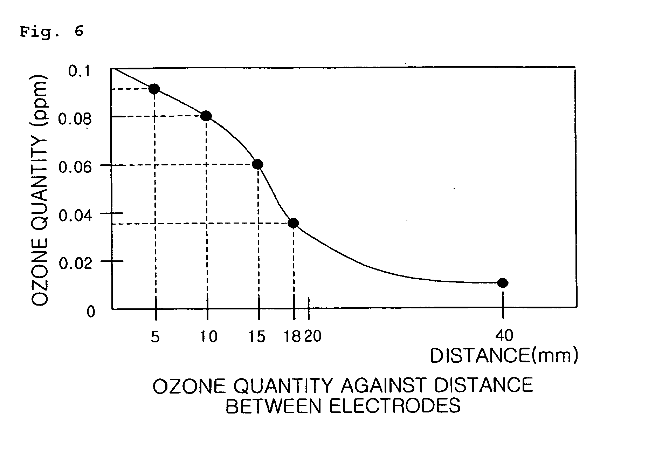

As can be seen in Fig. 6, if the gap d between the negative ion discharge electrode 56 and the positive ion discharge electrode 58 is smaller than 5mm, there is a fear that sparks are thrown between the electrodes 56 and 58, thereby generating an excessively large quantity of ozone (O₃) which is harmful to the human body. The ozone thus generated pollutes the vehicle room as it is introduced into the vehicle room.

If the gap d between the negative ion discharge electrode 56 and the positive ion discharge electrode 58 is greater than 20mm, the quantity of ozone (O₃) generated therebetween is decreased to such a level as to sharply reduce the efficiency of deodorizing and sterilizing the air, as illustrated in Fig. 6. In addition, if the gap d between the negative ion discharge electrode 56 and the positive ion discharge electrode 58 is greater than 20mm, the negative ions and positive ions generated are dispersed over a broad range, which may possibly reduce the sterilizing ability thereof.

Preferably, the gap d between the negative ion discharge electrode 56 and the positive ion discharge electrode 58 is kept equal to 15 mm. The reason is that, if gap d is equal to 15 mm, it becomes possible to generate optimal quantities of negative ions and positive ions while minimizing the generation quantity of ozone.

The gap d of about 5 to 20mm left between the negative ion discharge electrode 56 and the positive ion discharge electrode 58 is far smaller than the gap (20-50mm) between electrodes 48 and 49 available in the prior art. This makes it possible to reduce the size of the main body 50 and consequently to increase use of a space in the automotive vehicle.

Referring again to Figs. 3 to 5, the ionizer of the present invention further includes a controller 60 for controlling the operation of the main body 50. The controller 60 is provided with a microcomputer and a driving circuit and is adapted to operate the main body 50 of the ionizer upon starting up the automotive vehicle. More specifically, the controller 60 turns on the high voltage generating unit 55 of the main body 50 so that the negative ion discharge electrode 56 and the positive ion discharge electrode 58 of the main body 50 can generate negative ions and positive ions, respectively.

Since the controller 60 is designed to operate the ionizer in response to startup of the automotive vehicle, the negative ions and positive ions can be generated regardless of the operation of the air conditioning system. This means that, even when the air conditioning system remains inoperative, it is possible to sterilize bacteria and mold living on the surface of the evaporator 30.

In addition to operating the ionizer upon startup of the automotive vehicle, the controller 60 may be configured to operate the main body 50 of the ionizer, e.g., at the time when an air quantity control switch of the air conditioning system is turned on.

Referring again to Figs. 3 to 5, the controller 60 includes a clean mode 62 for increasing the generation quantities of the negative ions and positive ions, an ion mode 64 for reducing the generation quantities of the negative ions and positive ions, and a control unit 66 for controlling the high voltage generating unit 55 of the main body 50 in the clean mode or the ion mode depending on the operation of the evaporator 30.

The clean mode 62 is designed to increase the generation quantities of the negative ions and positive ions and consequently to enhance the sterilizing effect of the evaporator 30. Clean mode data corresponding to the clean mode are stored in the clean mode 62. The ion mode 64 is designed to reduce the generation quantities of the negative ions and positive ions and consequently to reduce the quantity of positive ions introduced into the vehicle room. Ion mode data corresponding to the ion mode are stored in the ion mode 64.

If the air conditioning system is turned on to operate the evaporator 30, the control unit 66 controls the high voltage generating unit 55 of the main body 50 in the clean mode using the clean mode data. More specifically, the control unit 66 is designed to increase the voltage applied to the negative ion discharge electrode 56 and the positive ion discharge electrode 58 by controlling the high voltage generating unit 55 in the clean mode. As a result, large quantities of negative ions and positive ions are generated in the electrodes 56 and 58 so that the evaporator 30 can be sterilized in an efficient manner.

If the air conditioning system is turned off to stop the operation of the evaporator 30, the control unit 66 controls the high voltage generating unit 55 of the main body 50 in the ion mode using the ion mode data. More specifically, the control unit 66 is designed to reduce the voltage applied to the negative ion discharge electrode 56 and the positive ion discharge electrode 58 by controlling the high voltage generating unit 55 in the ion mode. As a consequence, small quantities of negative ions and positive ions are generated in the electrodes 56 and 58 so that the quantity of positive ions introduced into the vehicle room can be reduced to the greatest possible degree. In this regard, it is preferred that the number of positive ions introduced into the vehicle room is kept substantially equal to or smaller than about 100,000 in the clean mode and about 30,000 in the in the ion mode.

With the controller 60 configured as above, the quantities of negative ions and positive ions are automatically controlled depending on the operation of the air conditioning system. This makes it possible to remarkably reduce the number of positive ions introduced into the vehicle room while maximizing the sterilizing efficiency of the evaporator 30. Particularly, during operation of the air conditioning system in which bacteria are rapidly proliferated in the evaporator 30, the quantities of negative ions and positive ions are automatically increased to thereby maximize the sterilizing efficiency of the evaporator 30. During non-operation of the air conditioning system in which bacteria are rapidly proliferated in the evaporator 30, the quantities of negative ions and positive ions are automatically reduced to thereby reduce the quantity of positive ions introduced into the vehicle room.

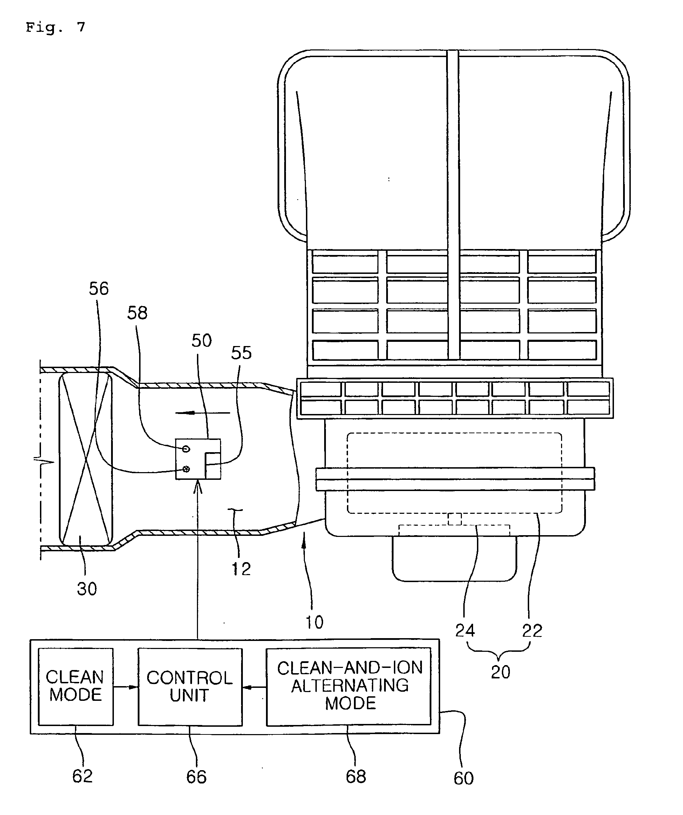

Shown in Fig. 7 is a modified example of the controller 60 which includes a clean-and-ion alternating mode 68 in place of the ion mode 64. In the clean-and-ion alternating mode 68, the ion mode and the clean mode are alternately carried out at a predetermined time interval to increase and reduce the emission quantities of negative ions and positive ions at the predetermined time interval. Needless to say, alternating mode data are stored in the clean-and-ion alternating mode 68.

The controller 60 of the modified example includes a control unit 66 that, if the air conditioning system is turned off to stop the evaporator 30, controls the high voltage generating unit 55 of the main body 50 alternately in the ion mode and the clean mode at the predetermined time interval using the alternating mode data. More specifically, the control unit 66 allows the electrodes 56 and 58 to generate large quantities of negative ions and positive ions and small quantities of negative ions and positive ions in an alternating manner by controlling the high voltage generating unit 55 alternately in the ion mode and the clean mode. The control unit 66 of the modified example that allows the electrodes 56 and 58 to alternately generate large quantities of negative ions and positive ions and small quantities of negative ions and positive ions is capable of minimizing the number of positive ions introduced into the vehicle room without reducing the sterilizing efficiency of the evaporator 30.

The control unit 66 includes a timer (not shown) that counts the time required in operating the high voltage generating unit 55 alternately in the ion mode and the clean mode at the predetermined time interval. In this connection, it is preferred that the predetermined time interval is about fifteen minutes.

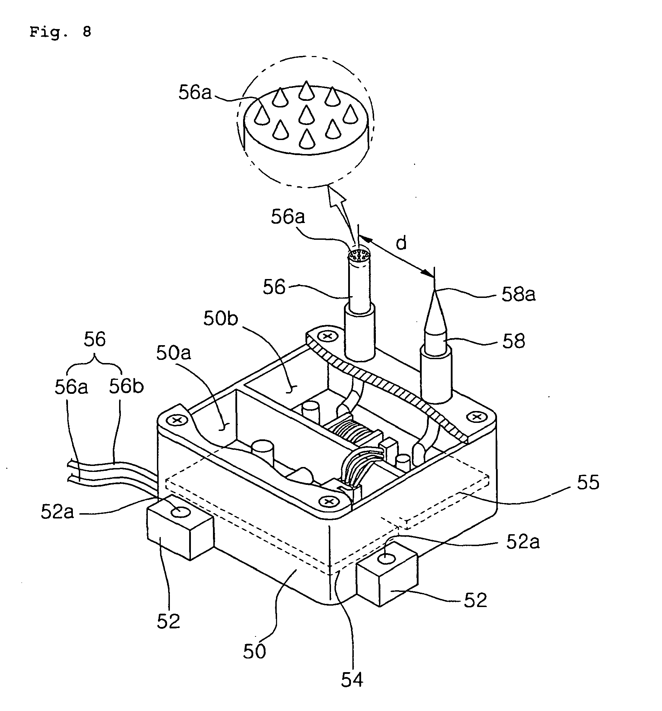

Figs. 8 to 10 illustrates a series of modified examples of the negative ion discharge electrode 56 and the positive ion discharge electrode 58 constituting the ionizer.

With the modified embodiment of the electrodes 56 and 58 illustrated in Fig. 8, the ion generation portion 56a of the negative ion discharge electrode 56 is formed of a rod with a plurality of tip ends and the ion generation portion 58a of the positive ion discharge electrode 58 is formed of a needle.

The rod of the ion generation portion 56a of the negative ion discharge electrode 56 is a metal rod having a multiple number of pointed projections at its tip end. High voltage pulses are emitted from the respective pointed projections, meaning that the ion generation portion 56a generates a large quantity of high voltage pulses and hence a large quantity of negative ions.

The needle of the ion generation portion 58a of the positive ion discharge electrode 58 is made of a metallic material and has a single pointed end portion that emits high voltage pulses. Therefore, the ion generation portion 58a generates a small quantity of high voltage pulses and hence a small quantity of positive ions. This means that the quantity of positive ions is quite smaller than the quantity of negative ions generated in the rod type negative ion discharge electrode 56.

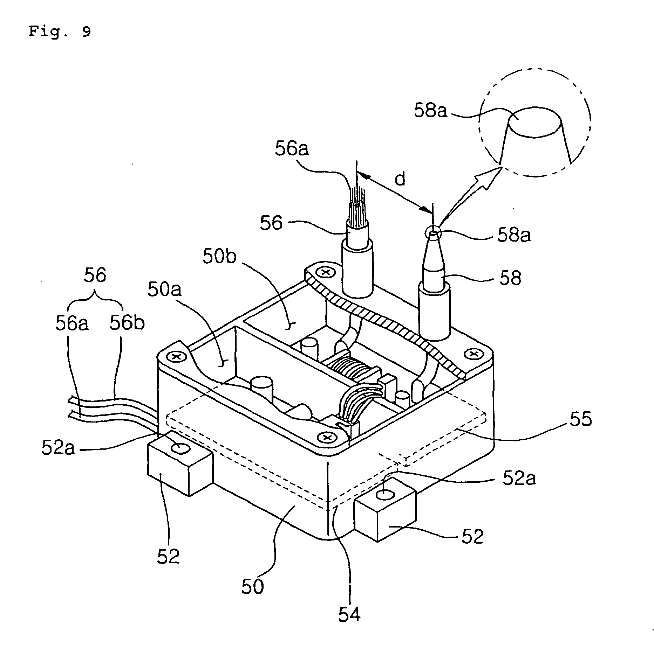

With the modified embodiment of the electrodes 56 and 58 illustrated in Fig. 9, the ion generation portion 56a of the negative ion discharge electrode 56 is formed of a brush and the ion generation portion 58a of the positive ion discharge electrode 58 is formed of a circular truncated cone.

The brush of the ion generation portion 56a of the negative ion discharge electrode 56 is adapted to emit high voltage pulses from the respective bristles thereof, meaning that the ion generation portion 56a generates a large quantity of high voltage pulses and hence a large quantity of negative ions.

The circular truncated cone of the ion generation portion 58a of the positive ion discharge electrode 58 is adapted to emit high voltage pulses only at the circumferential edge of the tip end portion thereof. Therefore, the ion generation portion 58a generates a small quantity of high voltage pulses and hence a small quantity of positive ions. This means that the quantity of positive ions is quite smaller than the quantity of negative ions generated in the brush type negative ion discharge electrode 56.

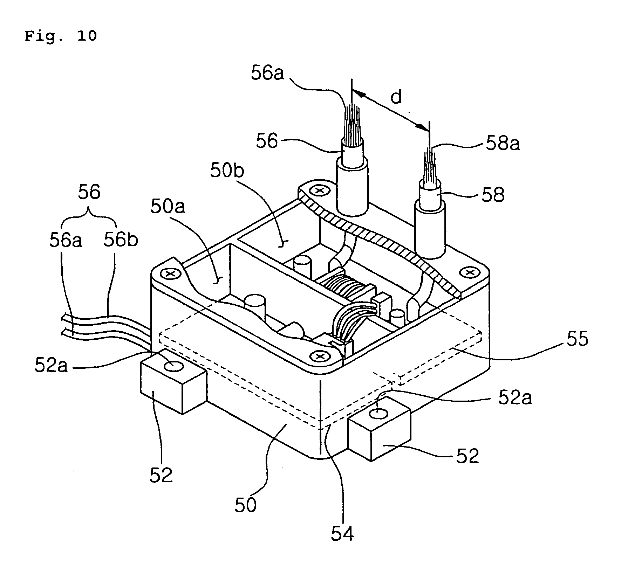

With the modified embodiment of the electrodes 56 and 58 illustrated in Fig. 10, the ion generation portions 56a and 58a of the electrodes 56 and 58 are all formed of a brush. The brush of the ion generation portion 56a of the negative ion discharge electrode 56 has dense bristles but the brush of the ion generation portion 58a of the negative ion discharge electrode 56 has sparse bristles.

Since the brush of the ion generation portion 56a of the negative ion discharge electrode 56 has dense bristles, a large quantity of high voltage pulses are generated from the bristles, consequently generating a large quantity of negative ions. In contrast, since the brush of the ion generation portion 58a of the positive ion discharge electrode 58 has bristles more sparsely arranged than the bristles of the brush of the ion generation portion 56a, the quantity of high voltage pulses generated in the positive ion discharge electrode 58 is smaller than the quantity of high voltage pulses generated in the negative ion discharge electrode 56. This means that the quantity of positive ions generated in the positive ion discharge electrode 58 is quite smaller than the quantity of negative ions generated in the negative ion discharge electrode 56.

The electrodes 56 and 58 of the modified examples configured as above are of a structure in which the generation quantity of positive ions is smaller than the generation quantity of negative ions. Therefore, it is possible to sharply reduce the quantity of positive ions introduced into the vehicle room without reduction in the quantity of negative ions. This makes it possible to remarkably reduce pollution of the vehicle room environment caused by the introduction of positive ions.

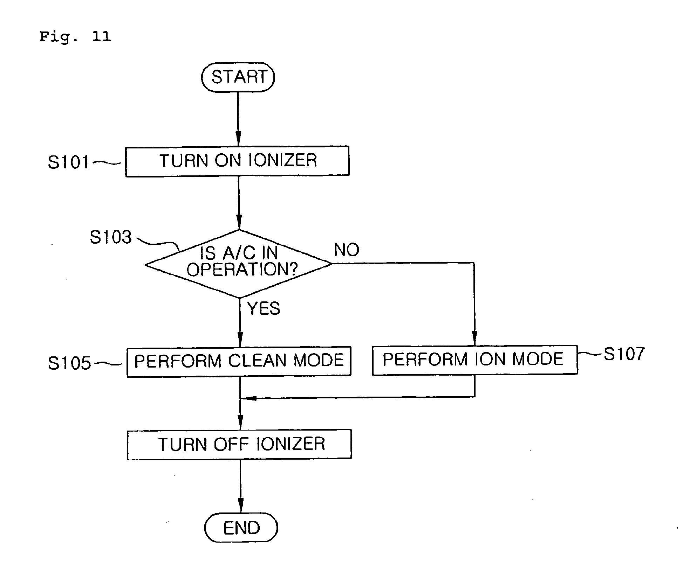

Next, an ionizer control method using the ionizer as configured above will be described with reference to Figs. 3 and 11.

First, the ionizer is turned on (S101), in which state the controller 60 determines whether the air conditioning system is in operation (S103). If the results of determination reveal that the air conditioning system is in operation, the high voltage generating unit 55 of the ionizer is operated in the clean mode (S105). Then, the negative ion discharge electrode 56 and the positive ion discharge electrode 58 generate large quantities of negative ions and positive ions, thereby efficiently sterilizing the evaporator 30.

On the other hand, if it is determined that the air conditioning system is not in operation, the high voltage generating unit 55 of the ionizer is operated in the ion mode (S107). Then, the negative ion discharge electrode 56 and the positive ion discharge electrode 58 generate small quantities of negative ions and positive ions, thereby sterilizing the evaporator 30. The negative ions and positive ions used in sterilizing the evaporator 30 are extinguished by impinging on the evaporator 30, as a result of which relatively small quantities of negative ions and positive ions are introduced into the vehicle room. This helps minimize pollution of the vehicle room caused by the introduction of positive ions.

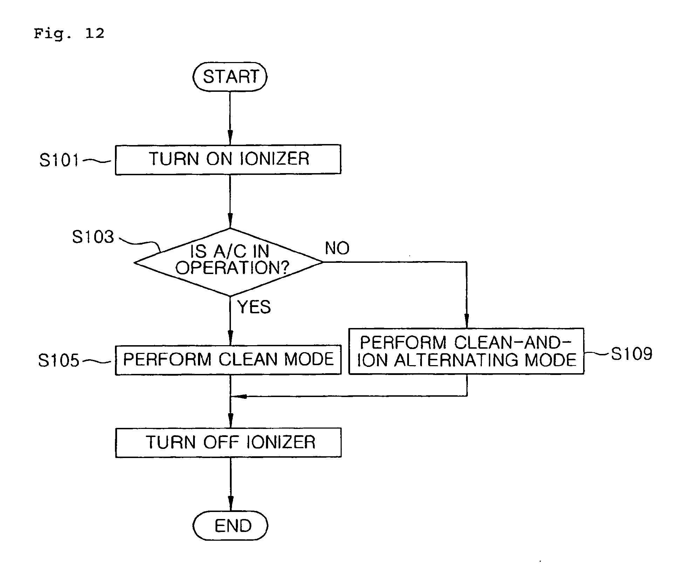

Fig. 12 is a flowchart illustrating a modified example of the ionizer control method. In the ionizer control method of this modified example, if the air conditioning system is not in operation, the high voltage generating unit 55 of the ionizer is operated alternately in the ion mode and the clean mode at the predetermined time interval (S109). Then, the negative ion discharge electrode 56 and the positive ion discharge electrode 58 generate large quantities of negative ions and positive ions and small quantities of negative ions and positive ions in an alternating manner, thereby sterilizing the evaporator 30.

While a preferred embodiment of the invention has been described hereinabove, the present invention is not limited to this embodiment. It is to be understood that various changes and modifications may be made without departing from the scope of the invention defined in the claims.

### [Industrial Applicability]

The present invention can find its applications in the field of an ionizer that can reduce generation of positive ions harmful to the human body to the greatest possible degree and an air conditioning system using the ionizer.

## Claims

1. An ionizer comprising:
a high voltage generating unit (55) for generating high voltage pulses; and
a negative ion discharge electrode (56) and a positive ion discharge electrode (58) for generating negative ions and positive ions, respectively, by discharging the high voltage pulses generated in the high voltage generating unit (55) into an air, **characterised in that**
the positive ion discharge electrode (58) has an ion generation portion (58a) having pointed end portion in a smaller number than the number of pointed end portion of an ion generation portion (56a) of the negative ion discharge electrode (56) so that the quantity of positive ions generated in the positive ion discharge electrode (58) can be smaller than the quantity of negative ions generated in the negative ion discharge electrode (56).

2. The ionizer according to claim 1, wherein the ion generation portion (56a) of the negative ion discharge electrode (56) is formed of a brush and the ion generation portion (58a) of the positive ion discharge electrode (58) is formed of a single needle.

3. The ionizer according to claim 1, wherein the ion generation portion (56a) of the negative ion discharge electrode (56) is formed of a brush and the ion generation portion (58a) of the positive ion discharge electrode (58) is formed of a circular truncated cone.

4. The ionizer according to claim 1, wherein the ion generation portions (56a and 58a) of the negative ion discharge electrode (56) and the positive ion discharge electrode (58) are both formed of a brush, the brush of the positive ion discharge electrode (58) having bristles more sparsely arranged than bristles of the brush of the negative ion discharge electrode (56).

5. The ionizer according to claim 1, wherein the ion generation portion (56a) of the negative ion discharge electrode (56) is formed of a rod with a plurality of tip ends and the ion generation portion (58a) of the positive ion discharge electrode (58) is formed of a single needle.

6. The ionizer according to any one of claims 1 to 5, wherein the negative ion discharge electrode (56) and the positive ion discharge electrode (58) are spaced apart from each other by a gap (d) of 5mm to 20mm.

7. An air conditioning system for automotive vehicles comprising:
an air conditioning case (10);
an evaporator (30) for cooling an air blown through an internal passageway (12) of the air conditioning case (10); and
an ionizer according to any one of claims 1 to 6.

8. The air conditioning system for automotive vehicles according to claim 7, further comprising a controller (60) which includes:
a clean mode (62) for increasing a voltage applied to the negative ion discharge electrode (56) and the positive ion discharge electrode (58) to thereby increase emission quantities of negative ions and positive ions during operation of the evaporator (30); and
an ion mode (64) for decreasing a voltage applied to the negative ion discharge electrode (56) and the positive ion discharge electrode (58) to thereby reduce emission quantities of negative ions and positive ions during non-operation of the evaporator (30).

9. The air conditioning system for automotive vehicles according to claim 7, further comprising a controller (60) which includes:
a clean mode (62) for increasing a voltage applied to the negative ion discharge electrode (56) and the positive ion discharge electrode (58) to thereby increase emission quantities of negative ions and positive ions during operation of the evaporator (30); and
a clean-and-ion alternating mode (68) for alternately increasing and decreasing a voltage applied to the negative ion discharge electrode (56) and the positive ion discharge electrode (58) at a predetermined time interval to thereby increase and reduce emission quantities of negative ions and positive ions at the predetermined time interval during non-operation of the evaporator (30).

## Patentansprüche

1. Ionisator, umfassend
- eine Hochspannung erzeugende Einheit (55) zum Erzeugen eines Hochspannungs-Stromstoßes; und
- eine Negativ-Ionen-Abgabe-Elektrode (56) und eine Positiv-Ionen-Abgabe-Elektrode (58) zum Erzeugen negativer Ionen bzw. positiver Ionen durch Abgeben der Hochspannungs-Stromstöße, die in der Hochspannung erzeugenden Einheit (55) erzeugt werden, an Luft, **dadurch gekennzeichnet, dass**
- die Positiv-Ionen-Abgabe-Elektrode (58) einen Ionen erzeugenden Teil (58a) aufweist, der spitz zulaufende End-Teile in kleinerer Zahl aufweist als die Zahl der spitz zulaufenden End-Teile eines Ionen erzeugenden Teils (56a) der Negativ-Ionen-Abgabe-Elektrode (56), so dass die Menge von in der Positiv-Ionen-Abgabe-Elektrode (58) erzeugten positiven Ionen kleiner sein kann als die Menge von in der Negativ-Ionen-Abgabe-Elektrode (56) erzeugten negativen Ionen.

2. Ionisator nach Anspruch 1, worin der Ionen erzeugende Teil (56a) der Negativ-Ionen-Abgabe-Elektrode (56) gebildet wird durch eine Bürste und der Ionen erzeugende Teil (58a) der Positiv-Ionen-Abgabe-Elektrode (58) gebildet wird durch eine einzelne Nadel.

3. Ionisator nach Anspruch 1, worin der Ionen erzeugende Teil (56a) der Negativ-Ionen-Abgabe-Elektrode (56) gebildet wird durch eine Bürste und der Ionen erzeugende Teil (58a) der Positiv-Ionen-Abgabe-Elektrode (58) gebildet wird durch einen kreisförmigen Kegelstumpf.

4. Ionisator nach Anspruch 1, worin die Ionen erzeugenden Teile (56a und 58a) der Negativ-Ionen-Abgabe-Elektrode (56) und der Positiv-Ionen-Abgabe-Elektrode (58) beide gebildet werden durch eine Bürste, wobei die Bürste der Positiv-Ionen-Abgabe-Elektrode (58) Borsten spärlicher angeordnet aufweist als die Borsten der Bürste der Negativ-Ionen-Abgabe-Elektrode (56).

5. Ionisator nach Anspruch 1, worin der Ionen erzeugende Teil (56a) der Negativ-Ionen-Abgabe-Elektrode (56) gebildet ist aus einem Stab mit einer Vielzahl von Spitzen-Enden und der Ionen erzeugende Teil (58a) der Positiv-Ionen-Abgabe-Elektrode (58) gebildet ist aus einer einzigen Nadel.

6. Ionisator nach irgendeinem der Ansprüche 1 bis 5, worin die Negativ-Ionen-Abgabe-Elektrode (56) und die Positiv-Ionen-Abgabe-Elektrode (58) voneinander um einen Spalt (d) von 5 mm bis 20 mm beabstandet sind.

7. Klimaanlagen-System für Kraftfahrzeuge, umfassend
- ein Klimaanlagen-Gehäuse (10);
- einen Verdampfer (30) zum Kühlen von Luft, die durch einen Innendurchgang (12) des Klimaanlagen-Gehäuses (10) geblasen wird; und
- einen Ionisator nach irgendeinem der Ansprüche 1 bis 6.

8. Klimaanlagen-System für Kraftfahrzeuge nach Anspruch 7, weiter umfassend eine Regler-Einheit (60), welche einschließt
- eine Betriebsart "Reinigen" (62) zum Erhöhen einer an die Negativ-Ionen-Abgabe-Elektrode (56) und die Positiv-Ionen-Abgabe-Elektrode (58) angelegten Spannung, um dadurch die Emissions-Mengen an negativen Ionen und positiven Ionen während des Betriebs des Verdampfers (30) zu erhöhen; und
- eine Betriebsart "Ionen" (64) zum Senken einer an die Negativ-Ionen-Abgabe-Elektrode (56) und die Positiv-Ionen-Abgabe-Elektrode (58) angelegten Spannung, um dadurch die Emissions-Mengen an negativen Ionen und positiven Ionen während des Nicht-Betriebs des Verdampfers (30) zu reduzieren.

9. Klimaanlagen-System für Kraftfahrzeuge nach Anspruch 7, weiter umfassend eine Regler-Einheit (60), welche einschließt
- eine Betriebsart "Reinigen" (62) zum Erhöhen einer an die Negativ-Ionen-Abgabe-Elektrode (56) und die Positiv-Ionen-Abgabe-Elektrode (58) angelegten Spannung, um dadurch die Emissions-Mengen an negativen Ionen und positiven Ionen während des Betriebs des Verdampfers (30) zu erhöhen; und
- eine Betriebsart "Reinigen und Ionen abwechselnd" (68) zum abwechselnden Erhöhen und Senken einer an die Negativ-Ionen-Abgabe-Elektrode (56) und die Positiv-Ionen-Abgabe-Elektrode (58) angelegten Spannung in einem vorbestimmten Zeit-Intervall, um dadurch die Emissions-Mengen an negativen Ionen und positiven Ionen in dem vorbestimmten Zeit-Intervall während des Nicht-Betriebs des Verdampfers (30) zu erhöhen und zu reduzieren.

## Revendications

1. Un ioniseur comprenant :
une unité de génération haute tension (55) destinée à générer des impulsions haute tension, et
une électrode de décharge d'ions négatifs (56) et une électrode de décharge d'ions positifs (58) destinées à générer des ions négatifs et des ions positifs, respectivement, par une décharge des impulsions haute tension générées dans l'unité de génération haute tension (55) dans un air, **caractérisé en ce que**
l'électrode de décharge d'ions positifs (58) possède une partie de génération d'ions (58a) possédant des parties d'extrémité pointues en un nombre plus faible que le nombre de parties d'extrémité pointues d'une partie de génération d'ions (56a) de l'électrode de décharge d'ions négatifs (56) de sorte que la quantité d'ions positifs générée dans l'électrode de décharge d'ions positifs (58) peut être plus faible que la quantité d'ions négatifs générée dans l'électrode de décharge d'ions négatifs (56).

2. L'ioniseur selon la revendication 1, dans lequel la partie de génération d'ions (56a) de l'électrode de décharge d'ions négatifs (56) est formée d'une brosse et la partie de génération d'ions (58a) de l'électrode de décharge d'ions positifs (58) est formée d'une aiguille unique.

3. L'ioniseur selon la revendication 1, dans lequel la partie de génération d'ions (56a) de l'électrode de décharge d'ions négatifs (56) est formée d'une brosse et la partie de génération d'ions (58a) de l'électrode de décharge d'ions positifs (58) est formée d'un cône tronqué circulaire.

4. L'ioniseur selon la revendication 1, dans lequel les parties de génération d'ions (56a et 58a) de l'électrode de décharge d'ions négatifs (56) et de l'électrode de décharge d'ions positifs (58) sont toutes les deux formées d'une brosse, la brosse de l'électrode de décharge d'ions positifs (58) possédant des crins agencés de manière plus clairsemée que les crins de la brosse de l'électrode de décharge d'ions négatifs (56).

5. L'ioniseur selon la revendication 1, dans lequel la partie de génération d'ions (56a) de l'électrode de décharge d'ions négatifs (56) est formée d'une tige avec une pluralité d'extrémités de pointe et la partie de génération d'ions (58a) de l'électrode de décharge d'ions positifs (58) est formée d'une aiguille unique.

6. L'ioniseur selon l'une quelconque des revendications 1 à 5, dans lequel l'électrode de décharge d'ions négatifs (56) et l'électrode de décharge d'ions positifs (58) sont espacées l'une de l'autre par un espace (d) de 5 mm à 20 mm.

7. Un système de climatisation pour véhicules automobiles comprenant :
une chambre de climatisation (10),
un évaporateur (30) destiné à rafraîchir un air soufflé au travers d'un passage interne (12) de la chambre de climatisation (10), et
un ioniseur selon l'une quelconque des Revendications 1 à 6.

8. Le système de climatisation pour véhicules automobiles selon la Revendication 7, comprenant en outre un système de commande (60) qui comprend :
un mode nettoyage (62) destiné à augmenter une tension appliquée à l'électrode de décharge d'ions négatifs (56) et à l'électrode de décharge d'ions positifs (58) de façon à augmenter ainsi les quantités émises d'ions négatifs et d'ions positifs pendant le fonctionnement de l'évaporateur (30), et
un mode ions (64) destiné à diminuer une tension appliquée à l'électrode de décharge d'ions négatifs (56) et à l'électrode de décharge d'ions positifs (58) de façon à réduire ainsi les quantités émises d'ions négatifs et d'ions positifs pendant le non-fonctionnement de l'évaporateur (30).

9. Le système de climatisation pour véhicules automobiles selon la revendication 7, comprenant en outre un système de commande (60) qui comprend :
un mode nettoyage (62) destiné à augmenter une tension appliquée à l'électrode de décharge d'ions négatifs (56) et à l'électrode de décharge d'ions positifs (58) de façon à augmenter ainsi les quantités émises d'ions négatifs et d'ions positifs pendant le fonctionnement de l'évaporateur (30), et
un mode alterné nettoyage et ions (68) destiné à augmenter et à diminuer de manière alternée une tension appliquée à l'électrode de décharge d'ions négatifs (56) et à l'électrode de décharge d'ions positifs (58) à un intervalle de temps prédéterminé de façon à augmenter et réduire ainsi les quantités émises d'ions négatifs et d'ions positifs à l'intervalle de temps prédéterminé pendant le non-fonctionnement de l'évaporateur (30).
